# EUROPEAN PATENT SPECIFICATION

(11) **EP 4 237 299 B1**
(45) Date of publication and mention of the grant of the patent: **26.03.2025**
(21) Application number: 21799357.5
(22) Date of filing: 28.10.2021
(51) Int. Cl.: B60T 13/74, F16D 65/16, B60K 7/00, F16D 121/24

(54) **ELECTROMECHANICAL BRAKE SYSTEM WITH HIGH-VOLTAGE MOTOR**
ELEKTROMECHANISCHES BREMSSYSTEM MIT HOCHSPANNUNGSMOTOR
SYSTÈME DE FREINAGE ÉLECTROMÉCANIQUE AVEC MOTEUR À HAUTE TENSION

(30) Priority: 29.10.2020 EP 20204660
(43) Date of publication of application: 06.09.2023
(73) Proprietor: Hitachi Astemo Netherlands B.V., 5301 LX Zaltbommel (NL)
(72) Inventor: MALDONADO, Emilio, 5301 LX Zaltbommel (NL)
(74) Representative: V.O.
(86) International application number: PCT/NL2021/050656
(87) International publication number: WO 2022/093022

(56) References cited:
- KR-B1- 101 714 052
- US-A1- 2019 126 894
- US-A1- 2019 135 135

## Description

### TECHNICAL FIELD AND BACKGROUND

The present invention relates to electromechanical brake systems, an integrated drive and brake system, and a road vehicle such as car, truck or motorcycle, comprising the brake system or integrated system.

As background, US 2019/0126894 describes a piece of electrical equipment for connecting to an electromechanical brake actuator and to an electromechanical drive actuator; US 2019/0135135 describes an electric brake apparatus and electric brake system; KR 101,714,052 B1 describes an electro mechanical brake force sensing unit.

An electromechanical brake system typically has an electromechanical actuation device, with which a friction brake lining can be pressed for braking against a brake body that is fixed against relative rotation to a vehicle wheel. The brake body is typically a brake disk or a brake drum. The actuation device typically has an electric motor and a rotation-to-translation conversion gear that converts a rotary driving motion of the electric motor into a translational motion for pressing the friction brake lining against the brake body. Main types of automotive disk brakes, e.g., include a fixed type caliper with pistons on both sides of the brake disk and a floating type caliper with piston(s) on one side of the caliper. Worm gears, such as spindle gears or roller worm drives, are often used as rotation-to-translation conversion gears. It is also possible to convert the rotary motion into a translational motion by means of a pivotable cam, for instance. A series of step-down gears, for instance in the form of planetary gears, is typically placed between the electric motor and the rotation-to-translation conversion gear, to increase the necessary torque. Self-boosting electromechanical brake systems have a self-booster that converts a frictional force, exerted by the rotating brake body against the friction brake lining that is pressed for braking against the brake body, into a contact pressure, which presses the friction brake lining against the brake body in addition to a contact pressure that is exerted by the actuation device. Wedge, ramp, and lever mechanisms can be used for the self-boosting.

There is a need for further simplification and compactification of electromechanical brake systems, e.g. allowing them to be combined and integrated with other systems.

### SUMMARY

Aspects of the present invention relate to an electromechanical brake system. A brake mechanism is configured to apply braking to a wheel of a vehicle, or release braking of the wheel, depending on a position of the brake mechanism. An electric brake motor is configured to transduce electrical power into mechanical power. A force transmission chain is configured to transmit the mechanical power from the electric brake motor to the brake mechanism for changing the position of the brake mechanism. As described herein the electric brake motor is preferably a high-voltage motor. The inventors find that, by connecting the electro-mechanical brake actuator to a high-voltage energy source, e.g. battery, the mechanical transmission between the electrical machine and the brake disc can be substantially simplified compared to a conventional low voltage brake motor. For example, a higher voltage motor may consume a smaller current, and the motor can provide a higher torque, needing a smaller transmission ratio thus resulting in a simplified transmission. Advantageously, the simplified transmission and/or lower current can lead to improved efficiency. Furthermore, the inventors recognize that this allows further integration of components leading to a more compact design wherein various functions can be combined and/or integrated. For example, the compact brake mechanism allows the system to integrated into the wheel, optionally combined with drive system, e.g. including a traction motor that can also be fitted into the wheel; or otherwise placed in close proximity. Advantageously, the brake and traction motor can both receive power from the same high voltage source. Furthermore, the proximity of these systems allows combining functions such as cooling and/or regenerative braking. Also the length of high power electrical wiring can be decreased.

### BRIEF DESCRIPTION OF DRAWINGS

These and other features, aspects, and advantages of the apparatus, systems and methods of the present invention will become better understood from the following description, appended claims, and accompanying drawing wherein:
FIG 1 illustrates a schematic diagram of an electromechanical brake system;
FIG 2A illustrates aspects of an integrated drive and brake system;
FIG 2B illustrates other or further aspects of an integrated drive and brake system;
FIGs 3A and 3B illustrates aspects of a cooling system;
FIG 4 illustrates an integrated drive and brake system inside a wheel;
FIGs 5A and 5B illustrate a respective force transmission chain of an electromechanical brake system.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

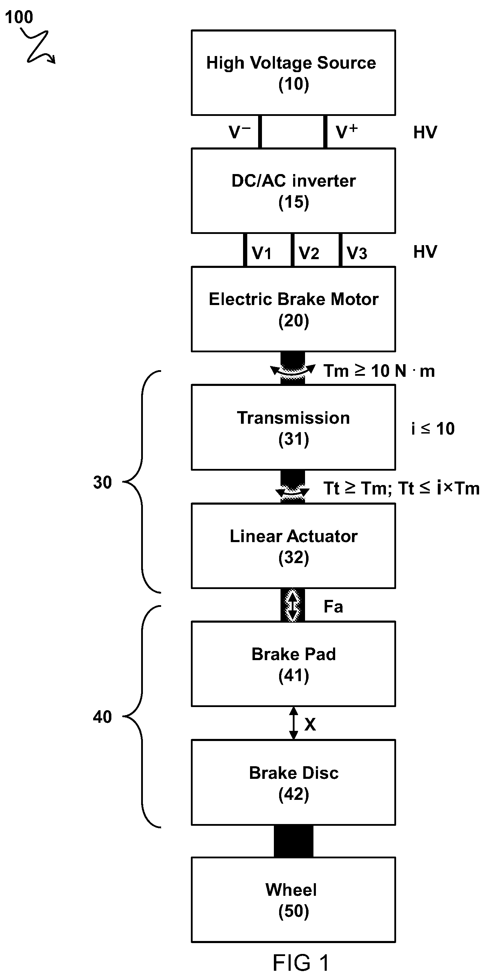

FIG 1 illustrates a schematic diagram of an electromechanical brake system 100. Typically, the brake system 100 comprises a brake mechanism 40. For example, the brake mechanism 40 is configured to apply braking to a wheel 50 of a vehicle, or release braking of the wheel 50, depending on a position X of the brake mechanism 40. As illustrated, an electric brake motor 20 is configured to transduce electrical power into mechanical power Tm. In some embodiments, the brake system 100 comprises a force transmission chain 30. For example, the force transmission chain 30 is configured to transmit the mechanical power Tm from the electric brake motor 20 to the brake mechanism 40, e.g. Tm→Tt→Fa. This may be used for changing the position X of the brake mechanism 40.

In a preferred embodiment, the electric brake motor 20 is a high-voltage motor configured to receive a high voltage "HV". As described herein, the term high voltage "HV" is a voltage of at least two hundred volt, preferably at least four hundred volt, more preferably at least six hundred volt, e.g. up to twelve hundred volt, or more. This may be compared to a traditional brake motor operating typically at twelve volt. Other electronics are typically operated under five volts. The higher the voltage, the less current is drawn, the higher the efficiency and/or the less current is drawn. Preferably, the electric brake motor 20 is configured to operate the brake system with an electric current of less than fifty Amperes, preferably less than twenty-five Amperes, or even less than ten Amperes.

Additionally, or alternatively, a relatively high torque is available directly from an output shaft of the motor at reasonable current without overheating. So advantageously, the transmission ratio to the brake mechanism can be relatively low. In a preferred embodiment, the force transmission chain 30 between the electric brake motor 20 and the brake mechanism 40 has a transmission ratio i less than twenty, preferably less than ten, or even less than five.

Typically, the force transmission chain 30 comprises a transmission 31 configured to increase torque between the motor and the brake mechanism 40, e.g. by a set of rotating gears with different radius. For example, the motor delivers a torque Tm on its output shaft, while the transmission increases this to a torque Tt. The factor (Tt/Tm) by which the torque is increased is typically proportional to the transmission ratio. In some embodiments, a robust and compact solution is provided by including at least one planetary gear set in the transmission 31. Of course also other or further gearsets can be included. At the end of the force transmission chain 30, the rotating motion of the transmission 31 can be converted to a linear motion by a mechanism 32. For example, the mechanism 32 is configured converts rotational motion into linear motion, e.g. comprising a nut and spindle. Also other mechanism can be envisaged such as a linear actuator. In some embodiments, the electric brake motor 20 is directly connected to the mechanism 32 which actuates the brake pad 41 against the brake disc 42. So the transmission ratio can be one, i.e. the output torque Tm of the motor is applied directly to drive the mechanism 32.

In one embodiment, the brake system comprises a piston-type mechanism, but also other mechanism may be used. Typically, the brake transmission comprises a set of gears which are operationally connected to an output axle of the brake motor 20. In some embodiments, gears in the brake transmission are configured to drive a spindle which is housed in a spindle nut to move a piston. In one embodiment, the piston in turn is guided, e.g. by guide pins to drive the opening and closing movements of a caliper which can be considered part of the brake mechanism 40. For example, the caliper is fitted with two opposing brake pads. The mechanical energy which is transmitted via the brake transmission to the brake mechanism 40 is thus ultimately used to drive the two braking pads closer to each other to perform or activate a braking operation, and apart from each other to release of deactivate a braking operation. In some embodiments, the caliper is fixed to a bracket by which the caliper is, e.g., suspended over a brake disc 42 of a wheel such that the brake disc is provided between the pads of the caliper. For example, the brake disc 42, is connected to at least one wheel of the vehicle, e.g. to the wheel itself or on a wheel axle directly connected to the wheel and brake disc. Preferably, the brake mechanism 40 as described herein comprises a floating type caliper with one or more pistons (configured to operate the one or more brake pads and/or clamp the brake disc 42) exclusively on one side of the caliper.

In a preferred embodiment, the electric brake motor 20 is connected to a high-voltage energy source 10 via an inverter 15. A power inverter, or inverter, is a power electronic device or circuitry that changes direct current (DC) to alternating current (AC). Typically, the inverter does not produce any power; the power is provided by the DC source, e.g. battery. For example, the inverter comprising metal-oxide-semiconductor field-effect transistors (MOSFET). Alternatively, or additionally, the inverter comprises Insulated Gate Bipolar Transistors (IGBT).

In a preferred embodiment, the electric brake motor 20 is configured to receive power from the energy source 10 delivering its output voltage V (= |V⁺ - V⁻|) to the inverter 15. Preferably, this output voltage V of the energy source 10 is in range of the aforementioned high voltage "HV". In other words, the (DC) input voltage to the inverter 15 is the output voltage V⁺,V⁻ of the energy source 10 and the electric brake motor 20 is preferably connected directly to the high-voltage energy source 10 via the inverter 15. Alternatively, the output voltage of the high-voltage energy source 10 can be converted, e.g. by an optional DC/DC converter (not shown), to match an optimal (high) voltage of the inverter and/or motor, e.g. to work in an optimal efficiency range.

Typically, the inverter 15 is configured to output polyphase voltages, e.g. three-phase electric power, wherein each of the voltages V1,V2,V3 alternates with different phases. The conductors between the inverter and the motor are called lines, and the voltage between any two lines is called line voltage. The voltage measured between any line and neutral is called phase voltage. In some embodiments, at least one of the line voltage or the phase voltage of the inverter is in range of the aforementioned high voltage "HV".

In some embodiments, the electric brake motor 20 comprises a permanent magnet synchronous machine. Advantageously, this can provide a relatively high torque. Normally such motor can have the risk of demagnetizing the permanent magnets, e.g. using rare earth magnets, at high temperature. However, in view of the low current requirements of the present systems, this problem can be alleviated. Of course also other electrical motors can be used such as a switched reluctance motor, or a brushed or brushless direct current motor.

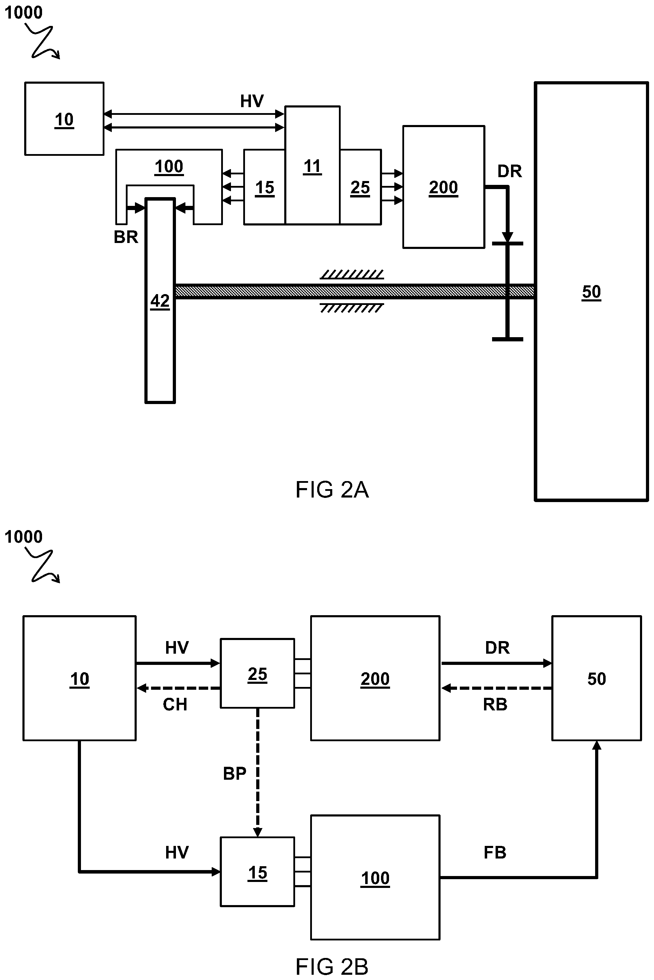

FIG 2A illustrates aspects of an integrated drive and brake system 1000. In a preferred embodiment, the integrated system 1000 comprises the electromechanical brake system 100, as described herein, e.g. configured to apply or release braking "BR" to a wheel 50. Most preferably, the integrated system 1000 further comprises an electromechanical drive system 200, e.g. configured to drive "DR" the wheel 50.

In some embodiments, the integrated system 1000 comprises a power distribution system 11 configured to receive the high voltage "HV" from a high voltage energy source 10 and distribute the high voltage "HV" to both the brake system 100 and drive system 100,200. In a preferred embodiment, the power distribution system 11 is configured to supply the high voltage "HV" to the electric brake motor 20 of the electromechanical brake system 100 via a first inverter 15. In another or further preferred embodiment, the power distribution system 11 is configured to supply the high voltage "HV" to a traction motor of the electromechanical drive system 200 via a second inverter 25. In a preferred embodiment, the same high voltage "HV" energy source 10 is used for the brake motor in the brake system 100 and for a traction motor of the drive system 200, which drives the wheel. In another or further preferred embodiment, the power distribution system 11 is disposed between the first and second inverters 11,21. Accordingly, power cables can be kept relatively short.

Some aspects of the present invention can be embodied as a road vehicle comprising one or more of the integrated drive and brake systems 1000 as described herein, preferably one for each wheel of the vehicle. Preferably, the vehicle comprises at least one high-voltage energy source 10 configured to supply the high voltage "HV" to the respective power distribution system 11 of each integrated drive and brake system 1000. For example, the high-voltage energy source 10 is a high-voltage rechargeable energy storage system. In some embodiments, the high-voltage energy source 10 comprises at least one of a Lithium-ion battery, a molten-salt battery, and a high-capacity lead battery. In other or further embodiments, the high-voltage energy source 10 comprises a super-capacitor or ultra-capacitor bank. For example, the vehicle can be a fully electric vehicle or hybrid vehicle. The brake system, as described herein can of course also be applied to a normal (non-electric) vehicle .

FIG 2B illustrates other or further aspects of an integrated drive and brake system 1000. In some embodiments, the drive system 200 is configured for driving DR the wheel 50, and the brake system 100 is configured for friction braking FB the wheel 50. In other or further embodiments, the drive system 200 is configured to apply regenerative braking RB to the wheel 50 and supply regenerated power from the regenerative braking RB to charge CH the energy source 10. For example, the system is configured to apply the friction braking FB in case the regenerative braking is insufficient.

In a preferred embodiment, the integrated drive and brake system 1000 is configured to receive regenerated power from regeneratively braking RB the wheel 50 by the drive system 200, and supply the regenerated power directly to the electromechanical brake system 100 for additionally applying friction braking FB to the wheel 50, at least partially bypassing "BP" the energy source 10, as illustrated. For example, the regenerated power can be output from the second inverter 25, connected to the drive system 200, to the first inverter 15, connected to the electromechanical brake system 100. This may be more efficient than first charging and then depleting the battery. In one embodiment, the output voltage from the second inverter 25 is converted before being fed into the first inverter 15, e.g. by an optional DC/DC converter (not shown) there between. The same or another DC/DC converter (not shown) can be placed between the energy source 10 and the first inverter 15.

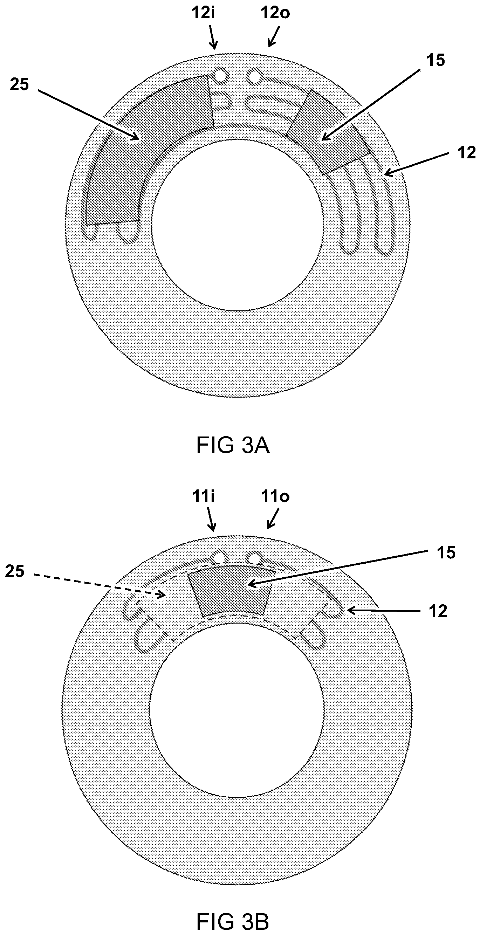

FIGs 3A and 3B illustrates aspects of a cooling system 12. In some embodiments, the integrated system comprises a shared cooling system 12 configured to apply cooling to both the first inverter 15 and the second inverter 25. For example, the cooling system 12 can be integrated as part of a cooling block that houses both inverters. Typically, the cooling system 12 comprises an inlet 12i where cooling fluid is fed into the system, and an outlet where the fluid exits the system after absorbing heat from the electrical and/or mechanical systems.

In a preferred embodiment, e.g. as shown in FIG 3A, the second inverter 25 is placed along a path of the cooling system 12 before first inverter 15. For example, the second inverter 25 typically produces more heat since it has to drive motion of the vehicle, whereas the first inverter 15 only has to apply the braking. In another or further preferred embodiment, e.g. as shown in FIG 3B, the first and second inverters 11,21 are disposed on opposite sides of the cooling system 12, e.g. on opposite sides of the cooling block or plate housing the cooling system 12. This can provide a particularly compact solution. For example, the cooling system can be integrated as part of the power distribution system 11.

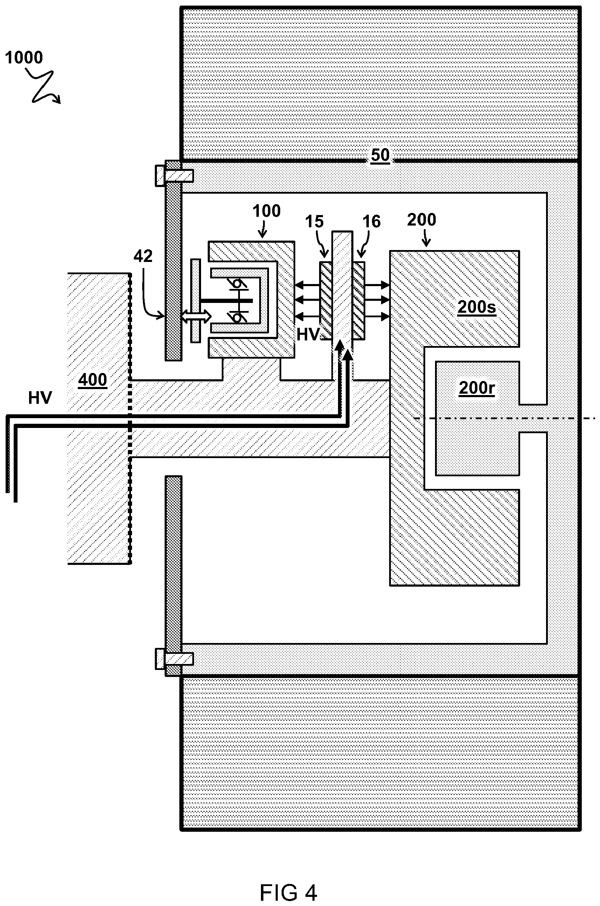

FIGs 4 illustrates a preferred embodiment wherein the drive and brake system 1000 is integrated and arranged (at least partially) inside a wheel 50. For example, the wheel 50 houses both the electromechanical brake system 100 and the drive system 200. Most preferably, the wheel also houses the first and second inverters 11,21, optionally including the power distribution system and/or cooling system (not indicated here). In some embodiments, the brake system 100 is arranged on a side of the wheel facing a chassis 400 of the vehicle and the drive system 200 is arranged on an opposite side facing away from the of chassis 400. For example, a brake disc 42 is connected to rotate with the wheel 50, and the brake system 100 is stationary inside the wheel and configured to grip brake disc 42 from inside the wheel, opposite the vehicle chassis 400. In some embodiments, the drive system 200 comprises a stator 200s that is fixed inside the wheel 50, and a rotor 200r configured to drive the wheel 50.

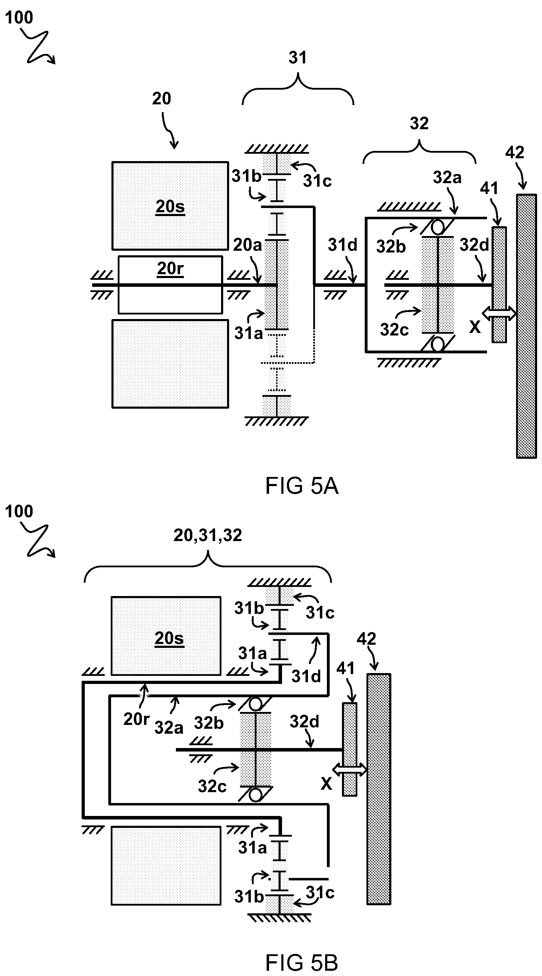

FIGs 5A and 5B illustrate a respective force transmission chain of an electromechanical brake system 100. Typically, the electric brake motor 20 comprises a stator 20s and a rotor 20r. In some embodiments, e.g. as shown in FIG 5A, the rotor 20r is connected to an output shaft 20a. Preferably, the transmission 31 comprises at least one planetary gear set (PGS). In one embodiment, the output shaft 20a is connected to a sun gear 31a of the PGS. In another or further embodiment, the PGS comprises a planet gear 31b configured to rotate while the ring gear 31c is stationary. In some embodiments, a rotating planet cage and transmission output shaft 31d is connected to rotate with the planet gear 31b. In one embodiment, the output shaft 31d is connected to a rotating cage or spindle 32a which forms part of the mechanism 32. The mechanism 32 comprises a profile 32b which, when rotated, causes an inner gear 32c to translate a shaft 32d which actuates the brake pad 41 against the brake disc 42. Preferably, the mechanism 32 comprises a ball screw. Of course also other forms of linear actuation can be used.

Now with reference to FIG 5B, it will be observed that an axial length of the system can substantially shortened compared to FIG 5A. In a preferred embodiment, the brake system 100 comprises the mechanism 32 at partially inside a stator 20s of the electric brake motor 20. For example, the rotor 20r comprises a hollow tube which rotates to directly or indirectly drive the mechanism 32. In some embodiments, e.g. as shown in the figure, the rotor 20r forms part of a sun gear 31a that rotates against a planet gear 31b. In other or further embodiments, the planet gear 31b is connected to a rotating cage or spindle 32a that is part of the mechanism 32 disposed inside the rotor 20r. For example, as described before, The mechanism 32 comprises a profile 32b which, when rotated, causes an inner gear 32c to translate a shaft 32d which actuates the brake pad 41 against the brake disc 42. While the PGS can be advantageous to increase the torque of the brake motor, it can also be envisaged to provide brake motor rotor 20r with the inner screw profile 32b, i.e. directly actuating the translating shaft 32d and brake pad 41.

For the purpose of clarity and a concise description, features are described herein as part of the same or separate embodiments, however, it will be appreciated that the scope of the invention as defined in the appended claims may include embodiments having combinations of all or some of the features described. For example, while embodiments were shown for various arrangements of electrical and mechanical systems, also alternative ways may be envisaged by those skilled in the art having the benefit of the present invention for achieving a similar function and result. E.g. the electrical and mechanical components may be combined or split up into one or more alternative components. The various elements of the embodiments as discussed and shown offer certain advantages, such as providing a compact and efficient brake system. For example, the system can run at a higher efficiency point, because its operating point can be tuned by the transmission ratio. The simplified transmission ratio can also means less moving parts and a higher efficiency, improving also brake NVH (Noise, Vibration, and Harshness). The packaging of the complete solution can be smaller as well, because of the lower transmission ratio required, and the heatsink can also be smaller given that the heat dissipation is lower. Advantages offered by invention may also include very low heat dissipation because of the much lower current drawn from the electrical machine.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function. Where one claim refers to another claim, this may indicate synergetic advantage achieved by the combination of their respective features. But the mere fact that certain measures are recited in mutually different claims does not indicate that a combination of these measures cannot also be used to advantage.

### LIST OF REFERENCE SIGNS

high voltage energy source (10), power distribution system (11), cooling system (12), cooling input (12i), cooling output (12i), DC/AC inverter (15), electric brake motor (20), brake motor rotor (20r), brake motor stator (20s), brake motor output shaft (20a), second inverter (25), force transmission chain (30), transmission (31), sun gear (31a), planet gear (31b), stationary ring gear (31c), rotating planet cage and transmission output shaft (31d), actuating mechanism (32), rotating cage (32a), inner screw profile (32b), inner gear (32c), translating shaft (32d), brake mechanism (40), brake pad (41), brake disc (42), wheel (50), electromechanical brake system (100), drive system (200), drive rotor (200r), drive stator (200s), vehicle chassis (400), integrated drive and brake system (1000), high voltage (HV), DC voltage (V⁺,V⁻), AC polyphase voltages (V1,V2,V3), torque from motor (Tm), torque after transmission (Tt), force of linear actuator (Fa), brake position (X), charge (CH), bypass (BP), drive (DR), regenerative braking (RB), friction braking (FB).

## Claims

1. An electromechanical brake system (100) for a road vehicle comprising
a brake mechanism (40) configured to apply braking to a wheel (50) of a vehicle, or release braking of the wheel (50), depending on a position (X) of the brake mechanism (40);
an electric brake motor (20) configured to transduce electrical power into mechanical power (Tm); and
a force transmission chain (30) configured to transmit (Tm→Tt→Fa) the mechanical power (Tm) from the electric brake motor (20) to the brake mechanism (40) for changing the position (X) of the brake mechanism (40);
**characterised in that**
the electric brake motor (20) is a high-voltage motor configured to receive a high voltage (HV) of at least two hundred volt.

2. The brake system (100) according to the preceding claim, wherein the electric brake motor (20) is connected to a high-voltage energy source (10) via an inverter (15), wherein the inverter is configured to output a line voltage of at least two hundred volt.

3. The brake system (100) according to the preceding claim, wherein the electric brake motor (20) is configured to receive power from the energy source (10) delivering its output voltage to the inverter (15), wherein the output voltage of the energy source (10) is at least two hundred volt and/or the electric brake motor (20) is configured to operate the brake system with an electric current of less than twenty-five Amperes.

4. The brake system (100) according to any of the preceding claims, wherein the force transmission chain (30) between the electric brake motor (20) and the brake mechanism (40) has a transmission ratio (i) less than ten.

5. The brake system (100) according to any of the preceding claims, wherein the force transmission chain (30) comprises a mechanism (32) which converts rotational motion into linear motion, wherein the mechanism is disposed at partially inside a stator (20s) of the electric brake motor (20).

6. The brake system (100) according to any of the preceding claims, wherein the brake mechanism (40) comprises a floating type caliper with one or more pistons, wherein the caliper comprises a first brake pad configured to face a first side of a brake disc (42) and a second brake pad configured to face an opposite, second side of the brake disc (42), wherein all pistons of the brake mechanism (40) are disposed on the first side.

7. An integrated drive and brake system (1000) comprising
the electromechanical brake system (100) according to any of the preceding claims configured to apply or release braking (BR) to a wheel (50);
an electromechanical drive system (200) configured to drive (DR) the wheel (50); and
a power distribution system (11) configured to receive the high voltage (HV) from a high voltage energy source (10) and distribute the high voltage (HV) to both the brake system (100) and drive system (200).

8. The integrated drive and brake system (1000) according to the preceding claim, wherein the integrated drive and brake system (1000) is configured to receive regenerated power from regeneratively braking (RB) the wheel (50) by the drive system (200), and supply the regenerated power directly to the electromechanical brake system (100) for additionally applying friction braking (FB) to the wheel (50), at least partially bypassing (BP) the energy source (10).

9. The integrated drive and brake system (1000) according to claim 7 or 8, wherein the power distribution system (11) is configured to supply the high voltage (HV) to the electric brake motor (20) of the electromechanical brake system (100) via a first inverter (15), and to supply the high voltage (HV) to a traction motor of the electromechanical drive system (200) via a second inverter (25).

10. The integrated drive and brake system (1000) according to the preceding claim, wherein the first and second inverters (11,21) are disposed on opposite sides of a cooling plate housing a cooling system (12) configured to cool both inverters.

11. The integrated drive and brake system (1000) according to any of claims 7 - 10, wherein the same high voltage (HV) energy source (10) is used for the brake motor in the brake system (100) and for a traction motor of the drive system (200), which drives the wheel.

12. The integrated drive and brake system (1000) according to any of claims 7 - 11, wherein the integrated drive and brake system (1000) is fitted inside the wheel (50).

13. The integrated drive and brake system (1000) according to the preceding claim, wherein the brake system (100) is arranged on a side of the wheel facing a chassis (400) of the vehicle and the drive system (200) is arranged on an opposite side facing away from the of chassis (400).

14. The integrated drive and brake system (1000) according to the preceding claim, wherein a brake disc (42) is connected to rotate with the wheel (50), and the brake system (100) is stationary inside the wheel and configured to grip the brake disc (42) from inside the wheel, opposite the vehicle chassis (400).

15. A road vehicle comprising
one or more of the brake system (100) according to any of claims 1- 6 and/or integrated drive and brake system (1000) according to any of claims 7 - 14, preferably one for each wheel of the vehicle; and
at least one high-voltage energy source (10) housed in the vehicle and configured to supply the high voltage (HV) to the respective brake system (100) and/or integrated drive and brake system (1000).

## Patentansprüche

1. Elektromechanisches Bremssystem (100) für ein Straßenfahrzeug, umfassend
einen Bremsmechanismus (40), dazu konfiguriert, in Abhängigkeit von einer Position (X) des Bremsmechanismus (40) Bremsung auf ein Rad (50) eines Fahrzeugs anzuwenden oder die Bremsung des Rades (50) zu lösen;
einen elektrischen Bremsmotor (20), dazu konfiguriert, elektrische Leistung in mechanische Leistung (Tm) umzuwandeln; und
eine Kraftübertragungskette (30), dazu konfiguriert, die mechanische Leistung (Tm) vom elektrischen Bremsmotor (20) auf den Bremsmechanismus (40) zu übertragen (Tm→Tt→Fa), um die Position (X) des Bremsmechanismus (40) zu ändern;
**dadurch gekennzeichnet, dass**
der elektrische Bremsmotor (20) ein Hochspannungsmotor ist, dazu konfiguriert, eine Hochspannung (HV) von mindestens zweihundert Volt zu empfangen.

2. Bremssystem (100) nach dem vorhergehenden Anspruch, wobei der elektrische Bremsmotor (20) über einen Wechselrichter (15) mit einer Hochspannungsenergiequelle (10) verbunden ist, wobei der Wechselrichter dazu konfiguriert ist, eine Netzspannung von mindestens zweihundert Volt auszugeben.

3. Bremssystem (100) nach dem vorhergehenden Anspruch, wobei der elektrische Bremsmotor (20) dazu konfiguriert ist, Strom von der Energiequelle (10), die ihre Ausgangsspannung an den Wechselrichter (15) liefert, zu empfangen, wobei die Ausgangsspannung der Energiequelle (10) mindestens zweihundert Volt beträgt und/oder der elektrische Bremsmotor (20) dazu konfiguriert ist, das Bremssystem mit einem elektrischen Strom von weniger als fünfundzwanzig Ampere zu betreiben.

4. Bremssystem (100) nach einem der vorhergehenden Ansprüche, wobei die Kraftübertragungskette (30) zwischen dem elektrischen Bremsmotor (20) und dem Bremsmechanismus (40) ein Übersetzungsverhältnis (i) von weniger als zehn aufweist.

5. Bremssystem (100) nach einem der vorhergehenden Ansprüche, wobei die Kraftübertragungskette (30) einen Mechanismus (32) umfasst, der Drehbewegung in lineare Bewegung umwandelt, wobei der Mechanismus teilweise innerhalb eines Stators (20s) des elektrischen Bremsmotors (20) angeordnet ist.

6. Bremssystem (100) nach einem der vorhergehenden Ansprüche, wobei der Bremsmechanismus (40) einen Schwimmsattel mit einem oder mehreren Kolben umfasst, wobei der Sattel einen ersten Bremsbelag umfasst, dazu konfiguriert, einer ersten Seite einer Bremsscheibe (42) zugewandt zu sein, und einen zweiten Bremsbelag, dazu konfiguriert, einer gegenüberliegenden zweiten Seite der Bremsscheibe (42) zugewandt zu sein, wobei alle Kolben des Bremsmechanismus (40) auf der ersten Seite angeordnet sind.

7. Integriertes Antriebs- und Bremssystem (1000), umfassend
das elektromechanische Bremssystem (100) nach einem der vorhergehenden Ansprüche, dazu konfiguriert, Bremsung (BR) auf ein Rad (50) anzuwenden oder zu lösen;
ein elektromechanisches Antriebssystem (200), dazu konfiguriert, das Rad (50) anzutreiben (DR); und
ein Stromverteilungssystem (11), dazu konfiguriert, die Hochspannung (HV) von einer Hochspannungsenergiequelle (10) zu empfangen und die Hochspannung (HV) an sowohl das Bremssystem (100) als auch das Antriebssystem (200) zu verteilen.

8. Integriertes Antriebs- und Bremssystem (1000) nach dem vorhergehenden Anspruch, wobei das integrierte Antriebs- und Bremssystem (1000) dazu konfiguriert ist, regenerierte Leistung vom regenerativen Bremsen (RB) des Rades (50) durch das Antriebssystem (200) zu empfangen und die regenerierte Leistung direkt dem elektromechanischen Bremssystem (100) zum zusätzlichen Anwenden von Reibungsbremsung (FB) auf das Rad (50) zuzuführen, wobei die Energiequelle (10) zumindest teilweise umgangen (BP) wird.

9. Integriertes Antriebs- und Bremssystem (1000) nach Anspruch 7 oder 8, wobei das Leistungsverteilungssystem (11) dazu konfiguriert ist, über einen ersten Wechselrichter (15) die Hochspannung (HV) dem elektrischen Bremsmotor (20) des elektromechanischen Bremssystems (100) zuzuführen und über einen zweiten Wechselrichter (25) die Hochspannung (HV) einem Traktionsmotor des elektromechanischen Antriebssystems (200) zuzuführen.

10. Integriertes Antriebs- und Bremssystem (1000) nach dem vorhergehenden Anspruch, wobei der erste und der zweite Wechselrichter (11, 21) auf gegenüberliegenden Seiten einer Kühlplatte, enthaltend ein zum Kühlen beider Wechselrichter konfiguriertes Kühlsystem (12), angeordnet sind.

11. Integriertes Antriebs- und Bremssystem (1000) nach einem der Ansprüche 7 bis 10, wobei die gleiche Hochspannungs-(HV-)Energiequelle (10) für den Bremsmotor im Bremssystem (100) und für einen Traktionsmotor des Antriebssystems (200), welches das Rad antreibt, verwendet wird.

12. Integriertes Antriebs- und Bremssystem (1000) nach einem der Ansprüche 7 bis 11, wobei das integrierte Antriebs- und Bremssystem (1000) innerhalb des Rades (50) montiert ist.

13. Integriertes Antriebs- und Bremssystem (1000) nach dem vorhergehenden Anspruch, wobei das Bremssystem (100) auf einer einem Fahrgestell (400) des Fahrzeugs zugewandten Seite des Rades und das Antriebssystem (200) auf einer dem Fahrgestell (400) abgewandten gegenüberliegenden Seite angeordnet ist.

14. Integriertes Antriebs- und Bremssystem (1000) nach dem vorhergehenden Anspruch, wobei eine Bremsscheibe (42) so montiert ist, dass sie sich mit dem Rad (50) dreht, und das Bremssystem (100) innerhalb des Rades stationär und dazu konfiguriert ist, die Bremsscheibe (42) von der Innenseite des Rades, gegenüber dem Fahrzeugfahrgestell (400), zu greifen.

15. Straßenfahrzeug umfassend
eines oder mehrere der Bremssysteme (100) nach einem der Ansprüche 1 bis 6 und/oder integriertes Antriebs- und Bremssystem (1000) nach einem der Ansprüche 7 bis 14, vorzugsweise eines für jedes Rad des Fahrzeugs; und
wenigstens eine im Fahrzeug untergebrachte und zur Versorgung des jeweiligen Bremssystems (100) und/oder des integrierten Antriebs- und Bremssystems (1000) mit der Hochspannung (HV) konfigurierte Hochspannungsenergiequelle (10).

## Revendications

1. Système de frein électromécanique (100) pour un véhicule routier comprenant :
un mécanisme de frein (40) configuré pour appliquer le freinage sur une roue (50) d'un véhicule ou relâcher le freinage de la roue (50), en fonction d'une position (X) du mécanisme de frein (40) ;
un moteur de frein électrique (20) configuré pour la transduction de l'énergie électrique en énergie mécanique (Tm) ; et
une chaîne de transmission de force (30) configurée pour transmettre (Tm → Tt → Fa) l'énergie mécanique (Tm) du moteur de frein électrique (20) au mécanisme de frein (40) afin de modifier la position (X) du mécanisme de frein (40) ;
**caractérisé en ce que** :
le moteur de frein électrique (20) est un moteur à haute tension configuré pour recevoir une haute tension (HV) d'au moins deux cents volts.

2. Système de frein (100) selon la revendication précédente, dans lequel le moteur de frein électrique (20) est raccordé à une source d'énergie à haute tension (10) via un inverseur (15), dans lequel l'inverseur est configuré pour produire une tension de ligne d'au moins deux cents volts.

3. Système de frein (100) selon la revendication précédente, dans lequel le moteur de frein électrique (20) est configuré pour recevoir l'énergie de la source d'énergie (10) délivrant sa tension de sortie à l'inverseur (15), dans lequel la tension de sortie de la source d'énergie (10) est d'au moins deux cents volts et/ou le moteur de frein électrique (20) est configuré pour actionner le système de frein avec un courant électrique inférieur à vingtcinq ampères.

4. Système de frein (100) selon l'une quelconque des revendications précédentes, dans lequel la chaîne de transmission de force (30) entre le moteur de frein électrique (20) et le mécanisme de frein (40) a un rapport de transmission (i) inférieur à dix.

5. Système de frein (100) selon l'une quelconque des revendications précédentes, dans lequel la chaîne de transmission de force (30) comprend un mécanisme (32) qui transforme le mouvement de rotation en mouvement linéaire, dans lequel le mécanisme est disposé partiellement à l'intérieur d'un stator (20s) du moteur de frein électrique (20).

6. Système de frein (100) selon l'une quelconque des revendications précédentes, dans lequel le mécanisme de frein (40) comprend un étrier de type flottant avec un ou plusieurs pistons, dans lequel l'étrier comprend une première plaquette de frein configurée pour faire face à un premier côté d'un disque de frein (42) et une deuxième plaquette de frein configurée pour faire face à un deuxième côté opposé du disque de frein (42), dans lequel tous les pistons du mécanisme de frein (40) sont disposés sur le premier côté.

7. Système d'entraînement et de frein intégré (1000) comprenant :
le système de frein électromécanique (100) selon l'une quelconque des revendications précédentes, configuré pour appliquer ou relâcher le freinage (BR) sur une roue (50) ;
un système d'entraînement électromécanique (200) configuré pour entraîner (DR) la roue (50) ; et
un système de distribution d'énergie (11) configuré pour recevoir la haute tension (HV) d'une source d'énergie à haute tension (10) et distribuer la haute tension (HV) à la fois au système de frein (100) et au système d'entraînement (200).

8. Système d'entraînement et de frein intégré (1000) selon la revendication précédente, dans lequel le système d'entraînement et de frein intégré (1000) est configuré pour recevoir l'énergie régénérée à partir du freinage par régénération (RB) de la roue (50) par le système d'entraînement (200), et pour fournir l'énergie régénérée directement au système de frein électromécanique (100) pour appliquer de plus le freinage par friction (FB) sur la roue (50), contournant au moins partiellement (BP) la source d'énergie (10).

9. Système d'entraînement et de frein intégré (1000) selon la revendication 7 ou 8, dans lequel le système de distribution d'énergie (11) est configuré pour fournir la haute tension (HV) au moteur de frein électrique (20) du système de frein électromécanique (100) via un premier inverseur (15) et pour fournir la haute tension (HV) à un moteur de traction du système d'entraînement électromécanique (200) via un deuxième inverseur (25).

10. Système d'entraînement et de frein intégré (1000) selon la revendication précédente, dans lequel les premier et deuxième inverseurs (11, 21) sont disposés sur les côtés opposés d'une plaque de refroidissement logeant un système de refroidissement (12) configuré pour refroidir les deux inverseurs.

11. Système d'entraînement et de frein intégré (1000) selon l'une quelconque des revendications 7 à 10, dans lequel la même source d'énergie (10) à haute tension (HV) est utilisée pour le moteur de frein dans le système de frein (100) et pour un moteur de traction du système d'entraînement (200), qui entraîne la roue.

12. Système d'entraînement et de frein intégré (1000) selon l'une quelconque des revendications 7 à 11, dans lequel le système d'entraînement et de frein intégré (1000) est monté à l'intérieur de la roue (50).

13. Système d'entraînement et de frein intégré (1000) selon la revendication précédente, dans lequel le système de frein (100) est agencé sur un côté de la roue faisant face à un châssis (400) du véhicule et le système d'entraînement (200) est agencé sur un côté opposé orienté à l'opposé du châssis (400).

14. Système d'entraînement et de frein intégré (1000) selon la revendication précédente, dans lequel un disque de frein (42) est raccordé pour tourner avec la roue (50) et le système de frein (100) est fixe à l'intérieur de la roue et configuré pour saisir le disque de frein (42) depuis l'intérieur de la roue, opposé au châssis (400) du véhicule.

15. Véhicule routier comprenant :
un ou plusieurs parmi le système de frein (100) selon l'une quelconque des revendications 1 à 6 et/ou le système d'entraînement et de frein intégré (1000) selon l'une quelconque des revendications 7 à 14, de préférence un pour chaque roue du véhicule ; et
au moins une source d'énergie à haute tension (10) logée dans le véhicule et configurée pour fournir la haute tension (HV) au système de frein (100) respectif et/ou au système d'entraînement et de frein intégré (1000).
